# DEMANDE DE BREVET EUROPEEN

(11) **EP 2 687 420 A1**
(43) Date de publication de la demande: **22.01.2014**
(21) Numéro de dépôt: 13175193.5
(22) Date de dépôt: 04.07.2013
(51) Int. Cl.: B62B 5/04, B62B 3/00

(54) **Base roulante et pivotante horizontalement présentant une béquille verticalement escamotable**

(30) Priorité: 16.07.2012 FR 1256852
(71) Demandeur: COUTIER INDUSTRIE, 57970 Basse Ham (FR)
(72) Inventeur: Coutier, Charles, 57570 Cattenom (FR)
(74) Mandataire: Lavialle, Bruno François Stéphane

(57) **Abrégé**

L'invention concerne une base roulante comportant un châssis (1) rectangulaire, pourvu en partie inférieure, d'organes (2) de roulement et, à chaque extrémité, de moyens d'attelage (3,4) correspondants, l'un d'eux étant porté par un timon (5) relevable (A), caractérisée en ce que le châssis (1) est pourvu d'une béquille verticale (7), montée libre en rotation autour de son axe vertical et escamotable entre une position éloignée du sol (S) et une position en appui sur le sol.

## Description

La présente invention concerne une base roulante destinée à la manutention des pièces par exemple dans un atelier d'un poste à un autre (montage, chargement déchargement, approvisionnement...).

### ARRIERE PLAN DE L'INVENTION

La plupart des bases roulantes existantes comportent un châssis avec des roues en partie inférieure, une main courante ou barre de manoeuvre à l'une de leurs extrémités et des moyens d'attelage à chaque extrémité (en général un timon relevable qui possède en extrémité un anneau ou un boîtier pour coopérer avec un moyen d'attelage correspondant qui est un doigt vertical, un crochet ou une sphère).

Certaines de ces bases possèdent un plateau au-dessus du châssis qui peut tourner dans un plan horizontal pour augmenter le confort de l'utilisateur lors du chargement ou du déchargement manuel de la base. Ces bases sont un peu spéciales au sens où, pour une capacité donnée de transport qui est fonction de la surface de portage (rectangulaire) qu'offre la base, le châssis présente un cadre plus long que le plateau et de largeur sensiblement égale à celle du plateau. On comprend en effet que la rotation du plateau tournant balaye à sa base, au-dessus du châssis, une surface circulaire dont le diamètre est égal à la dimension de sa diagonale.

De telles bases sont donc plus encombrantes que les bases ordinaires, à capacité de chargement égale.

Or la capacité de manutention des bases roulantes tend à s'uniformiser et il se pose un besoin de rationalisation de la fabrication de celles-ci qui n'est pas satisfait par les bases à plateau tournant.

L'invention répond à ce besoin par une structure nouvelle du châssis des bases roulantes.

### OBJET DE L'INVENTION

C'est ainsi que l'invention a pour objet une base roulante comportant un châssis rectangulaire, pourvu en partie inférieure, d'organes de roulement et, à chaque extrémité, de moyens d'attelage correspondants, l'un d'eux étant porté par un timon relevable, **caractérisée en ce que** le châssis est pourvu d'une béquille verticale, montée libre en rotation autour de son axe vertical et escamotable entre une position éloignée du sol et une position en appui sur le sol.

Cette béquille, lorsqu'elle est en service, forme un axe de rotation fixe pour l'ensemble de la base roulante. En même temps, elle en constitue un frein de position qui peut être complété par un frein secondaire pour fixer la base angulairement autour de l'axe de pivotement.

Par ailleurs, la béquille est appliquée au sol sous une force déterminée qui constitue une force de soulagement de la charge portant sur les roues et facilite la rotation pour l'opérateur.

Des moyens de commande sont prévus pour actionner la béquille entre ses deux positions. Ces moyens peuvent être de différentes natures connues en elles-mêmes. Par exemple on peut mette en oeuvre un câble de traction pour agir sur la béquille dans le sens de son éloignement du sol à l'encontre d'un ressort de rappel qui tend à appliquer la béquille au sol, associé à un verrou automatique de blocage de la béquille dans sa position haute. Une pédale solidaire du châssis peut agir en traction sur le câble alors qu'une autre pédale peut agir sur le verrou pour libérer la béquille.

D'autres caractéristiques et avantages de l'invention ressortiront de la description donnée ci-après d'un exemple de réalisation de l'invention.

### BREVE DESCRIPTION DES DESSINS

Il sera fait référence aux dessins annexés dans lesquels :

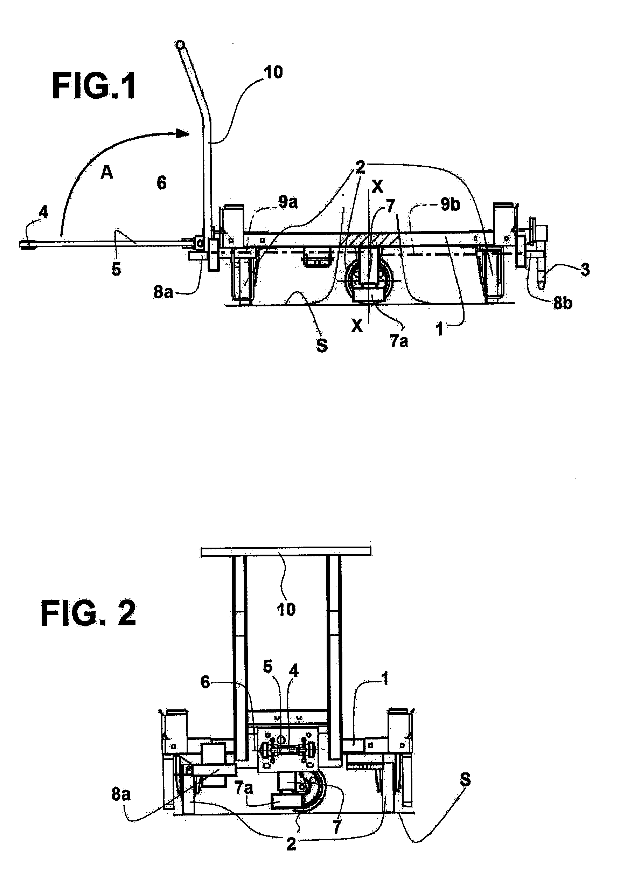

- la figure 1 est une vue schématique de côté d'une base roulante et pivotante conforme à l'invention,
- la figure 2 est une vue de face de cette même base.

### DESCRIPTION DETAILLEE DE L'INVENTION

Aux figures, la base roulante comporte un châssis 1 avec des roues inférieures 2, ici au nombre de quatre disposées en losange sous la base et montées pivotantes autour d'un axe vertical pour les roues avant et arrière et fixes pour les roues latérales.

Ce châssis est équipé à ses extrémités longitudinales (le contour du châssis est rectangulaire) de moyens pour son attelage à une base précédente et/ou suivante ou à un véhicule tracteur. Dans le cas des figures, ceux-ci comporte un doigt 3 à une extrémité et, à son autre extrémité, un anneau 4 dans lequel le doigt peut être logé, cet anneau étant porté par un timon 5, relevable (A) autour d'un axe horizontal 6.

Dans d'autres cas, le timon peut être équipé d'un boîtier sphérique qui vient coiffer un crochet à boule.

Selon l'invention, le châssis 1 de la base roulante comporte en son centre une béquille inférieure 7, représentée schématiquement aux figures, qui peut être commandée entre un état escamoté (tel que représenté) dans lequel son extrémité inférieure en forme de patin 7a est éloignée du sol S et un état en service, par des pédales 8a, 8b reliées fonctionnellement à la béquille comme représenté symboliquement par les lignes 9a et 9b.

Cette béquille 7 est montée tournante, autour de son axe XX, sur le châssis 1 au moyen d'un palier ou d'une butée à bille. La béquille peut s'étendre à l'aplomb du centre du châssis préférentiellement ou être décalée par rapport à celui-ci.

Par exemple, ces lignes peuvent représenter des câbles sous gaines qui agissent sur la béquille 7 pour la relever contre l'effet d'un ressort intérieur et qui agissent sur un verrou à blocage automatique de la béquille en position haute pour libérer la descente de cette béquille sous l'effet du ressort au gré de l'opérateur.

D'autres moyens à biellettes ou leviers peuvent être employés.

On notera également aux figures la présence d'une poignée ou main courante 10 de manoeuvre de la base.

Bien entendu, l'invention n'est pas limitée au mode de réalisation décrit mais englobe toute variante entrant dans le champ de l'invention telle que définie par les revendications.

En particulier, les roues peuvent être disposées en losange sous le châssis (c'est-à-dire sensiblement sur les médiatrices du rectangle ou carré formé par le châssis) ou dans les coins de celui-ci (c'est-à-dire sensiblement sur les diagonales du châssis).

Toutes les roues peuvent être orientables (c'est-à-dire pivotantes autour d'un axe vertical) ou seulement une partie d'entre elles. La base roulante peut ainsi comprendre une ou deux roues orientables à l'avant et deux roues fixes à l'arrière (ou inversement) : la béquille peut être positionnée à l'aplomb du centre du châssis ou ailleurs et, par exemple, sensiblement entre les roues fixes de préférence au milieu entre ces dernières.

L'invention est applicable à tout type de base roulante et par exemple aux bases roulantes à châssis en tôles pliées, en tubes, en plateau...

## Revendications

1. Base roulante comportant un châssis (1) rectangulaire, pourvu en partie inférieure, d'organes (2) de roulement et, à chaque extrémité, de moyens d'attelage (3,4) correspondants, l'un d'eux étant porté par un timon (5) relevable (A), **caractérisée en ce que** le châssis (1) est pourvu d'une béquille verticale (7), montée libre en rotation autour de son axe vertical et escamotable entre une position éloignée du sol (S) et une position en appui sur le sol.

2. Base roulante selon la revendication 1, **caractérisée en ce que** la béquille (7) est appliquée au sol sous une force déterminée qui constitue une force de soulagement de la charge portant sur les roues (2).

3. Base roulante selon la revendication 1, dans laquelle la béquille s'étend à l'aplomb du centre du châssis.

4. Base roulante selon la revendication 1, comportant au moins une roue orientable et deux roues fixes, la béquille s'étendant entre les roues fixes.
